# EUROPEAN PATENT APPLICATION

(11) **EP 3 611 596 A1**
(43) Date of publication of application: **19.02.2020**
(21) Application number: 18188651.6
(22) Date of filing: 13.08.2018
(51) Int. Cl.: G06F 3/01, G06F 3/02

(54) **HAPTIC DEVICE, APPARATUS AND SYSTEM**

(71) Applicant: Vestel Elektronik Sanayi ve Ticaret A.S., 45030 Manisa (TR)
(72) Inventor: ÖZEN, Erol, 45030 Manisa (TR)
(74) Representative: Ascherl, Andreas

(57) **Abstract**

The present invention provides a haptic device (1) comprising a chamber (3) having first and second compartments (3a, 3b), a movable piston (5) separating the first and second compartments (3a, 3b) from each other, a resilient member (7) such as a spring communicating mechanically with the piston (5), and a fluid channel (11a, 11b) interconnecting the first and second compartments (3a, 3b). The first compartment (3a) contains a porous member (9) and comprises an aperture (17) allowing a user to touch the porous member (9). The second compartment (3b) is filled with an electrically conducting and incompressible liquid (15). The porous member (9), the movable piston (5) and the resilient member (7) are configured such that the porous member (9) can transmit pressure from a user touching the porous member (9) to the piston (5) against a restoring force of the resilient member (7). A user touching the porous member (9) causes the piston (5) to move away from the aperture (17), thereby reducing a capacity of the second compartment (3b) to contain the electrically conducting incompressible liquid (15). This forces at least some of the liquid (15) through the fluid channel (11a, 11b) from the second compartment (3b) to the first compartment (3a) for absorption by the porous member (9) to be felt by the user through the aperture (17). The invention also provides a haptic apparatus comprising a plurality of such devices (1), in which the porous members in respective ones of the plurality of haptic devices each have a different porosity from each other, allowing a user to feel different levels of wetness or dryness according to which one of the haptic devices the user touches, as well as a haptic system comprising such a haptic apparatus together with means for detecting a touch from a user on a porous member of one of the haptic devices by measuring a change in electrical resistance across the porous member.

## Description

The present invention relates to a haptic device according to claim 1, a haptic apparatus according to claim 7 and a haptic system according to claim 14.

### Background of the Invention

It is known to provide haptic feedback to a user through a surface using devices which provide different kinematic effects, such as different levels of vibration, changes in surface texture or in the perceived coefficient of friction of the surface. It is also known to provide haptic feedback to a user using changes in temperature of the surface. For example, US 2009/0120105 and WO 2009/061572 both describe techniques for providing haptic feedback to a user using variations in surface temperature.

However, all of these different known haptic feedback techniques suffer from the disadvantage that such devices comprise components which consume electrical power for their operation, such as motor-driven linear reciprocating actuators (LRAs) or heating and cooling elements. In addition, the components of such devices which generate such haptic effects also require control by a microprocessor to create the desired haptic feedback. Devices which provide haptic feedback to a user using variations in surface temperature can also be slow to react to user input because of the thermal inertia of components in such devices, and can also be dependent for their effects on ambient conditions, skin temperature of the user, and other factors which cannot be adequately controlled.

### Object of the Invention

It is therefore an object of the invention to provide a new haptic device, a haptic apparatus comprising such a haptic device, and a haptic system comprising such a haptic apparatus.

### Description of the Invention

The object of the invention is solved by a haptic device according to claim 1. The haptic device at least comprises a chamber comprising a first compartment and a second compartment, a movable piston separating the first compartment from the second compartment, a resilient member communicating mechanically with the piston, and at least one fluid channel interconnecting the first and second compartments. The first compartment contains a porous member and comprises an aperture allowing a user to touch the porous member. The second compartment is filled with an electrically conducting incompressible liquid. The porous member, the movable piston and the resilient member are configured such that the porous member can transmit pressure from a user touching the porous member to the piston against a restoring force of the resilient member. A user touching the porous member causes the piston to move away from the aperture, thereby reducing a capacity of the second compartment to contain the electrically conducting incompressible liquid and forcing at least some of the liquid through the at least one fluid channel from the second compartment to the first compartment for absorption by the porous member to be felt by the user through the aperture.

The resilient member may comprise, for example, a coil spring, a leaf spring and/or one or more elastically compressible pillars. The porous member may itself also be resilient.

This solution is beneficial because such a device can be used to provide haptic feedback to a user without consuming any electrical power, by giving the user a feeling of wetness of the porous member when the porous member is touched by the user. Such a type of haptic feedback is also advantageous because it is not affected by changes in ambient temperature or skin temperature of a user, and because it does not contain any electronic components is also unaffected by electrical interference and magnets. Such a device also does not require any complicated control by a microprocessor to create the desired haptic feedback. The haptic feedback is also immediate upon the porous member being touched by the user and is not subject to any time delay. Moreover, the device has a simple construction, making it cheap to manufacture and reliable to use with the potential for a long working life.

Advantageous embodiments of the invention may be configured according to any claim and/or part of the following description.

Preferably, the porous member at least comprises a honeycomb structure. Such a honeycomb, foam or sponge-like structure may be regularly ordered in the manner of a woven structure or lattice, with regularly arranged cavities therein, or it may be disordered and therefore contain randomly arranged cavities.

In some embodiments, the porous member may be at least partially made of a carbon-based material, such as carbon fibres. This is advantageous because such materials are robust when subjected to repeated elastic deformation and are not liable to degrade when repeatedly exposed to moisture.

In some embodiments, the electrically conducting and incompressible liquid may at least comprise ionized water. This has the advantages of being both cheap and safe to touch.

Preferably, the porous member is bonded to the movable piston, the movable piston is bonded to the resilient member, and the resilient member is bonded to the chamber. This solution is beneficial because it prevents the porous member, the movable piston and the resilient member from falling out of the chamber through the aperture.

In another embodiments, the device may further comprise a lip at least partially surrounding the aperture, which lip retains the porous member within the first compartment. In other words, the porous member is larger than a greatest dimension of the aperture and therefore cannot pass through it. This solution is beneficial because it also porous member, the movable piston and the resilient member from falling out of the chamber through the aperture.

The present invention also relates to a haptic apparatus at least comprising a plurality of haptic devices as described herein, wherein the porous members in respective ones of the plurality of haptic devices each have a different porosity from each other.

This solution is beneficial because such a haptic apparatus allows a user to experience different levels of wetness and dryness according to which one of the porous members in the different haptic devices the user touches. These different levels of wetness and dryness may therefore be related, for example, to correspondingly different user inputs to a machine which the haptic apparatus may be used to control.

In some embodiments, the porous members in respective ones of the plurality of haptic devices may each have a different modulus of elasticity from each other. This solution is beneficial because it allows the level of haptic feedback from each one of the haptic devices to be adjusted according to the different moduli of elasticity of the porous members therein.

In further embodiments, the porous members in respective ones of the plurality of haptic devices may each have a different electrical resistance from each other. This solution is beneficial because it allows the plurality of haptic devices to be distinguished from each other by measuring the electrical resistance across the porous members in the different haptic devices.

In some embodiments, the resilient members in respective ones of the plurality of haptic devices may each have a different modulus of elasticity from each other. This solution is beneficial because it also allows the level of haptic feedback from each one of the haptic devices to be adjusted according to the different moduli of elasticity of the resilient members therein.

Preferably, the plurality of haptic devices are arranged in order of increasing porosity of their respective porous members. This solution is beneficial because a user of the haptic apparatus can then experience a progressive scale of increasing (or decreasing) wetness as haptic feedback, which is in proportion to the porosity of the porous members in the plurality of haptic devices, according to which one of the porous members the user touches. Such a progressive scale of increasing (or decreasing) wetness as haptic feedback may therefore be readily mapped on to different levels of an operational parameter, for example of a machine which the haptic apparatus can be used to control.

In some embodiments, each one of the plurality of haptic devices may be contiguous with at least one other of the plurality of haptic devices. This solution is beneficial because it allows the plurality of haptic devices to be used to control a continuously variable operational parameter, without any steps or lacunae therein.

In another embodiments, the plurality of haptic devices may be arranged in a row. The row may, for example, be a substantially straight line, or it may be a curve, such as an arc of a circle. This solution is beneficial because it allows the haptic apparatus to be used to replace, for example, a mechanical or electrical slider or a dial or other similar type of control having a linear control path, whilst providing additional haptic feedback.

The present invention further relates to a haptic system at least comprising a haptic apparatus as described herein, a plurality of ohm-meters, respective ones of which are configured to measure an electrical resistance of the porous member in respective ones of the plurality of haptic devices of the haptic apparatus, and a microcontroller arranged to receive the electrical resistance of the porous members of the respective ones of the plurality of haptic devices from respective ones of the plurality of ohm-meters and to respond to a change in the electrical resistance of the porous members as measured by a respective one of the plurality of ohm-meters.

This solution is beneficial because the plurality of ohm-meters and the microcontroller together provide means for detecting a touch from a user on a porous member of one of the haptic devices by measuring a change in electrical resistance across the respective one of the porous members. Such a haptic system may therefore be used to provide user input to control one or more operational parameters of a machine, together with providing haptic feedback to the user via the haptic apparatus which the system comprises. The machine may, for example, be any one or more of a hob or oven, refrigerator, dishwasher, washing or clothes drying machine, air or water cooler or heater, or air conditioning unit, and the operational parameter may, for example, be any one or more of an operating temperature, moisture or humidity level, time setting or programme of the machine.

In some embodiments, the haptic system may further comprise a reservoir of the electrically conducting incompressible liquid, the reservoir being in fluid communication with each of the plurality of haptic devices to maintain a level of the incompressible liquid therein. This solution is beneficial because it can counter losses of the electrically conducting and incompressible liquid which are caused by, for example, touches from users and/or evaporation.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic longitudinal cross-section through an embodiment of a haptic device;
Fig. 2 is a schematic longitudinal cross-section through an embodiment of a haptic apparatus comprising a plurality of haptic devices such as that shown in Fig. 1; and
Fig. 3 is a schematic diagram of an embodiment of a haptic system comprising a haptic apparatus such as that shown in Fig. 2.

### Detailed Description of the Drawings

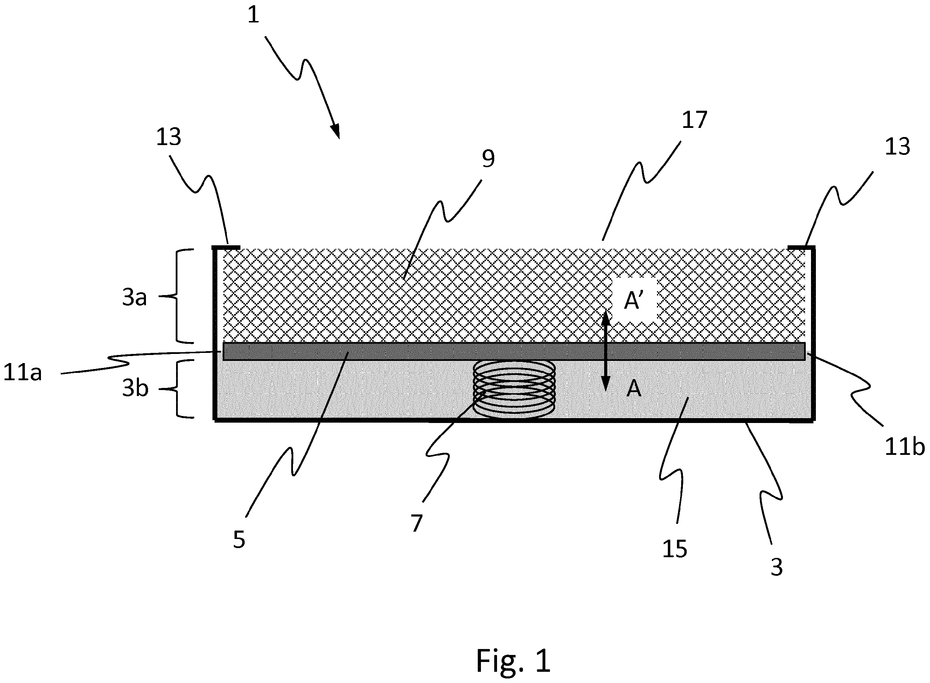

Fig. 1 schematically shows an embodiment of a haptic device 1. The haptic device 1 comprises a chamber 3 comprising a first compartment 3a and a second compartment 3b, and a movable piston 5 separating the first compartment 3a from the second compartment 3b. In the illustrated embodiment, the chamber 3 is cuboidal in shape, so that the first and second compartments 3a, 3b each have a rectangular plan. However, in other possible alternative embodiments, the chamber 3 could have one of several other different shapes, such as, for example, a cylinder, in which case, the first and second compartments 3a, 3b would each have a circular plan instead.

The haptic device 1 also comprises a resilient member 7 communicating mechanically with the piston 5, and fluid channels 11a, 11b on each side of the piston 5. The resilient member 7 may be a coil spring as in the embodiment shown in Fig. 1, although in other possible embodiments, it may alternatively or additionally comprise, for example, a leaf spring and/or one or more elastically compressible pillars. The fluid channels 11a, 11b interconnect the first and second compartments 3a, 3b with each other. The first compartment 3a contains a porous member 9. The porous member 9 has a honeycomb, foam or sponge-like structure 10, which may be regularly ordered or disordered, and therefore contains cavities which are normally filled by air, but which may be at least partially filled by a liquid. In a preferred embodiment, the porous member 9 may be at least partially made of a carbon-based material, such as loosely woven carbon fibre.

The second compartment 3b of the chamber 3 is filled with an electrically conducting and incompressible liquid 15. The electrically conducting incompressible liquid 15 may, for example, be ionized water. The first compartment 3a comprises an aperture 17, which allows a user to touch the porous member 9. In order to prevent the components 5, 7, 9 of the haptic device 1 from coming out of the chamber 3 through the aperture 17, the porous member 9 is bonded to the movable piston 5, and the movable piston 5 is bonded to the resilient member 7, which in turn is itself bonded to the chamber 3. In the embodiment shown in Fig. 1, a lip 13 surrounding the aperture 17 also helps to retain the porous member 9 within the first compartment 3a.

The porous member 9, the movable piston 5 and the resilient member 7 are configured such that the porous member 9 can transmit pressure from a user touching the porous member 9 through the aperture 17 to the piston 5 against a restoring force of the resilient member 7. A user touching the porous member 9 causes the piston 5 to move away from the aperture 17, in the direction of the arrow labelled A in Fig. 1. This movement of the piston 5 reduces a capacity of the second compartment 3b to contain the electrically conducting and incompressible liquid 15 and forces at least some of the liquid 15 through the channels 11a, 11b from the second compartment 3b into the first compartment 3a, where the liquid 15 is absorbed by the porous member 9. There, the incompressible liquid 15 can be sensed or felt by the user through the aperture 17. The user can therefore feel the wetness of the liquid 15 in the first compartment 3a for as long as the user continues to touch the porous member 9. Once the user ceases to touch the porous member 9, the restoring force of the resilient member 7 causes the piston 5 to move in the direction of the arrow labelled A' in Fig. 1 and return to its starting position, thereby increasing the capacity of the second compartment 3b to contain the electrically conducting incompressible liquid 15 and withdrawing the liquid 15 back through the channels 11a, 11b from the first compartment 3a to the second compartment 3b once again.

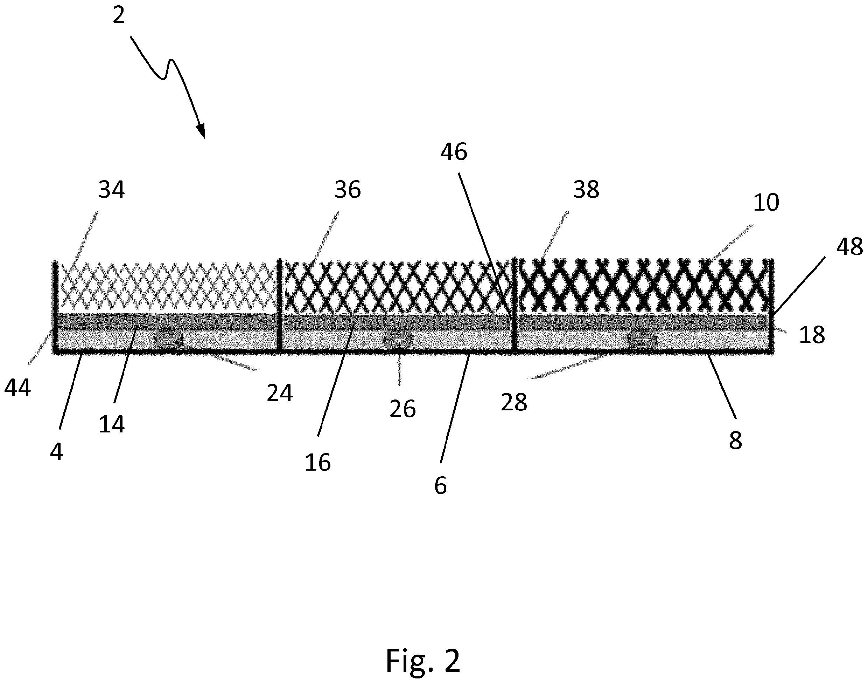

Fig. 2 schematically shows an embodiment of a haptic apparatus 2. The haptic apparatus 2 comprises a plurality of haptic devices 4, 6, 8, each of which is similar in construction and operation to that shown in and described above in relation to Fig. 1. The haptic devices 4, 6, 8 are arranged in a row, with each one of the plurality of haptic devices 4, 6, 8 contiguous with at least one other of the plurality of haptic devices 4, 6, 8. As in the illustrated embodiment, the row may be a substantially straight line, or in other, alternative possible embodiments, it may, for example, be a curve, such as an arc of a circle. The porous members 34, 36, 38 in each one of the plurality of haptic devices 4, 6, 8 each have a different porosity from each other. The plurality of haptic devices 4, 6, 8 are arranged in order of increasing porosity of their respective porous members 34, 36, 38. Thus, the haptic device 4 in the left of Fig. 2 has the highest porosity, the haptic device 6 in the middle of Fig.2 has a medium porosity, and the haptic device 8 in the right of Fig. 2 has the lowest porosity. In the illustrated embodiment, the different porosities of the different haptic devices 4, 6, 8 are achieved because the porous members 34, 36, 38 in each one of the plurality of haptic devices 4, 6, 8 each have a different density from each other. Thus, the porous member 34 in the haptic device 4 in the left of Fig. 2 has a higher density than the porous member 36 in the haptic device 6 in the middle of Fig. 2, which in turn itself has a higher density than the porous member 38 in the haptic device 8 in the right of Fig. 2. This means that the porous member 34 contains more and larger air-filled cavities that the porous member 36, which in turn itself contains more and larger air-filled cavities that the porous member 38. Thus when a user touches the porous member 34 in the haptic device 4, the incompressible liquid 15 is able to penetrate more readily and further into the porous member 34 than when a user touches the porous member 36, which in turn is itself penetrated by the incompressible liquid 15 more than the porous member 38, if either of them is touched by a user. The result is that the porous member 34 feels wetter to the user when touched than the porous member 36 does when touched, which in turn itself feels wetter than the porous member 38 does when touched by the user. Thus the haptic apparatus 2 provides a scale of different wetnesses, and therefore a modality of haptic feedback to the user, according to which one of the different haptic devices 4, 6, 8 in the haptic apparatus 2 is touched by the user.

In order to enhance or adjust the degree of haptic feedback, including the degree of wetness experienced by the user, other parameters of the plurality of haptic devices 4, 6, 8 than just the porosity of the porous members 34, 36, 38 in each one of the plurality of haptic devices 4, 6, 8 may be adjusted as well. Thus, the porous members 34, 36, 38 in respective ones of the plurality of haptic devices 4, 6, 8 may have a different modulus of elasticity from each other. This may be either the bulk modulus or the Young's modulus in the direction of the double-headed arrow A-A' shown in Fig. 1. The respectively different moduli of elasticity of the different porous members 34, 36, 38 may be a result of the different porous members 34, 36, 38 being made of different materials from each other, or having a different construction from each other, or a combination of the two. Alternatively or additionally, the resilient members 24, 26, 28 in respective ones of the plurality of haptic devices 4, 6, 8 may have a different modulus of elasticity from each other. This may also be either the bulk modulus or their Young's modulus in the direction of the double-headed arrow A-A' shown in Fig. 1. Once again, the respectively different moduli of elasticity of the different resilient members 24, 26, 28 may be a result of the different resilient members 24, 26, 28 being made of different materials from each other, or having a different construction from each other, or a combination of the two.

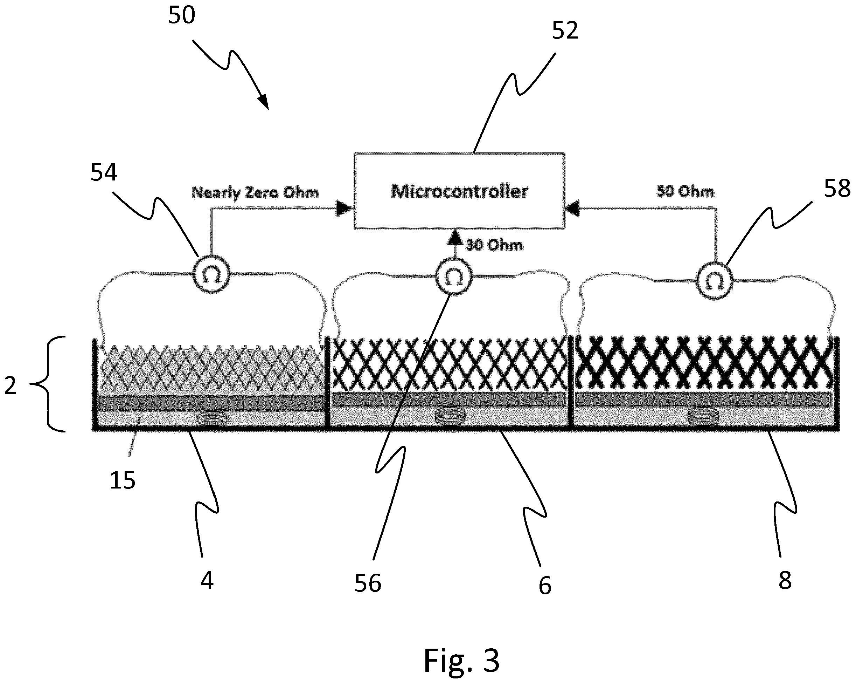

Fig. 3 schematically shows an embodiment of a haptic system 50. The haptic system 50 comprises a haptic apparatus 2, which is similar in construction and operation to the haptic apparatus 2 shown in and described above in relation to Fig. 2. The haptic system 50 further comprises a microcontroller 52 and a plurality of ohm-meters 54, 56, 58. Respective ones of the plurality of ohm-meters 54, 56, 58 are configured to measure an electrical resistance of the porous members 34, 36, 38 in respective ones of the plurality of haptic devices 4, 6, 8 of the haptic apparatus 2. Thus a first one of the ohm-meters 54 is electrically connected across a first one of the porous members 34, a second one of the ohm-meters 56 is electrically connected across a second one of the porous members 36, and a third one of the ohm-meters 58 is electrically connected across a third one of the porous members 38. The electrical resistance measured by each one of the plurality of ohm-meters 54, 56, 58 is input to the microcontroller 52. The microcontroller 52 is arranged to receive the respective electrical resistances of the porous members 34, 36, 38 of the respective ones of the plurality of haptic devices 4, 6, 8 from respective ones of the plurality of ohm-meters 54, 56, 58 and to respond to a change in the electrical resistance of the porous members 34, 36, 38 as measured by the respective one of the plurality of ohm-meters 54, 56, 58.

The porous members 34, 36, 38 in respective ones of the plurality of haptic devices 4, 6, 8 may each have a different electrical resistance from each other, according to their different construction from each other, the different materials of which they are made, or a combination of the two. In the embodiment illustrated in Fig. 3, the porous member in the haptic device 4 has a resting or "baseline" resistance of about 20 ohms, the porous member in the haptic device 6 has a resting or "baseline" resistance of about 30 ohms, and the porous member in the haptic device 8 has a resting or "baseline" resistance of about 50 ohms. However, when a user touches one of the plurality of haptic devices 4, 6, 8, as is illustrated in Fig. 3 in the case of the left-hand-most haptic device 4, the electrically conducting and incompressible liquid 15 enters the first compartment 3a of the haptic device 4, where it is absorbed by the porous member contained therein. Since the incompressible liquid 15 is electrically conducting, this has the effect of reducing the electrical resistance across the porous member in the left-hand-most haptic device 4 to nearly zero ohms. The microcontroller 52 recognizes this drop in resistance as measured by the ohm-meter 54 to be the result of the user touching the left-hand-most haptic device 4, and responds accordingly to how it has been programmed. If a user were instead to touch the porous member in a different one of the plurality of haptic devices 4, 6, 8, the electrical resistance across the porous member in the respective one of the haptic devices 4, 6, 8 would similarly drop to nearly zero ohms because of the electrical conductivity of the incompressible liquid 15 absorbed by the respective porous member, which the microcontroller 52 would therefore recognize as a different one of the plurality of haptic devices 4, 6, 8 having been touched by the user. On the other hand, when a user ceases to touch any one of the porous members in the plurality of haptic devices 4, 6, 8, the incompressible liquid 15 will leave the respective porous member and return to the second compartment 3b of the respective one of the plurality of haptic devices 4, 6, 8, therefore causing the electrical resistance of the porous member to return to its resting or "baseline" value. Thus each one of the plurality of haptic devices 4, 6, 8 of the haptic apparatus 2 may act as a user input control to the haptic system 50, each of which devices is able to function in a manner similar to an electrical contact made by touching a resiliently biased button.

In some embodiments, the haptic system 50 may further comprise a reservoir (not shown in Fig. 3) of the electrically conducting and incompressible liquid 15, which reservoir is in fluid communication with each one of the plurality of haptic devices 4, 6, 8. In such a case, the reservoir is arranged to replenish each one of the plurality of haptic devices 4, 6, 8 with the electrically conducting and incompressible liquid 15, in order to replace that lost to, for example, touches from users and/or evaporation, thereby to maintain a level of the incompressible liquid in each one of the plurality of haptic devices 4, 6, 8.

In summary, therefore, the present invention provides a haptic device comprising a chamber having first and second compartments, a movable piston separating the first and second compartments from each other, a resilient member, such as a spring, communicating mechanically with the piston, and a fluid channel interconnecting the first and second compartments. The first compartment contains a porous member and comprises an aperture allowing a user to touch the porous member. The second compartment is filled with an electrically conducting and incompressible liquid. The porous member, the movable piston and the resilient member are configured such that the porous member can transmit pressure from a user touching the porous member to the piston against a restoring force of the resilient member. A user touching the porous member causes the piston to move away from the aperture, thereby reducing a capacity of the second compartment to contain the electrically conducting incompressible liquid. This forces at least some of the liquid through the fluid channel from the second compartment to the first compartment for absorption by the porous member to be felt by the user through the aperture. The invention also provides a haptic apparatus comprising a plurality of such devices, in which the porous members in respective ones of the plurality of haptic devices each have a different porosity from each other, allowing a user to feel different levels of wetness or dryness according to which one of the haptic devices the user touches, as well as a haptic system comprising such a haptic apparatus together with means for detecting a touch from a user on a porous member of one of the haptic devices by measuring a change in electrical resistance across the porous member.

**Reference Numerals:**

| | | | |
|---|---|---|---|
| 1 | Haptic device | 2 | Haptic apparatus |
| 3 | Chamber | 4, 6, 8 | Haptic devices |
| 3a | First compartment | 10 | Honeycomb structure |
| 3b | Second compartment | 14, 16, 18 | Movable piston |
| 5 | Movable pistons | 24,26,28 | Resilient members |
| 7 | Resilient member | 34, 36, 38 | Porous members of differentporosity from each other |
| 9 | Porous member | 44, 46, 48 | Fluid channels |
| 11a, 11b | Fluid channels | 50 | Haptic system |
| 13 | Lip | 52 | Microcontroller |
| 15 | Electrically conducting incompressible liquid | 54, 56, 58 | Ohm-meters |
| 17 | Aperture | | |

## Claims

1. A haptic device (1) at least comprising:
a chamber (3) comprising a first compartment (3a) and a second compartment (3b);
a movable piston (5) separating the first compartment (3a) from the second compartment (3b);
a resilient member (7) communicating mechanically with the piston (5);
at least one fluid channel (11a, 11b) interconnecting the first and second compartments (3a, 3b);
the first compartment (3a) containing a porous member (9) and comprising an aperture (17) allowing a user to touch the porous member (9);
the second compartment (3b) being full of an electrically conducting and incompressible liquid (15);
the porous member (9), the movable piston (5) and the resilient member (7) being configured such that the porous member (9) can transmit pressure from a user touching the porous member (9) to the piston (5) against a restoring force of the resilient member (7);
a user touching the porous member (9) causing the piston (5) to move away from the aperture (17), thereby reducing a capacity of the second compartment (3b) to contain the electrically conducting incompressible liquid (15) and forcing at least some of the liquid (15) through the at least one fluid channel (11a, 11b) from the second compartment (3b) to the first compartment (3a) for absorption by the porous member (9) to be felt by the user through the aperture (17).

2. A haptic device according to claim 1, wherein the porous member (9) at least comprises a honeycomb structure (10).

3. A haptic device according to claim 1 or claim 2, wherein the porous member (9) is at least partially made of a carbon-based material.

4. A haptic device according to any one of claims 1 to 3, wherein the electrically conducting incompressible liquid (15) at least comprises ionized water.

5. A haptic device according to any one of claims 1 to 4, wherein the porous member (9) is bonded to the movable piston (5), the movable piston (5) is bonded to the resilient member (7), and the resilient member (7) is bonded to the chamber (3).

6. A haptic device according to any one of claims 1 to 5, further comprising a lip (13) at least partially surrounding the aperture (17), which lip (13) retains the porous member (9) within the first compartment (3a).

7. A haptic apparatus (2) at least comprising a plurality of haptic devices (4, 6, 8) according to any one of claims 1 to 6, wherein the porous members (34, 36, 38) in respective ones of the plurality of haptic devices (4, 6, 8) each have a different porosity from each other.

8. A haptic apparatus (2) according to claim 7, wherein the porous members (34, 36, 38) in respective ones of the plurality of haptic devices (4, 6, 8) each have a different modulus of elasticity from each other.

9. A haptic apparatus (2) according to claim 7 or claim 8, wherein the porous members (34, 36, 38) in respective ones of the plurality of haptic devices (4, 6, 8) each have a different electrical resistance from each other.

10. A haptic apparatus (2) according to any one of claims 7 to 9, wherein the resilient members (24, 26, 28) in respective ones of the plurality of haptic devices (4, 6, 8) each have a different modulus of elasticity from each other.

11. A haptic apparatus (2) according to any one of claims 7 to 10, wherein the plurality of haptic devices (4, 6, 8) are arranged in order of increasing porosity of their respective porous members (34, 36, 38).

12. A haptic apparatus (2) according to any one of claims 7 to 11, wherein each one of the plurality of haptic devices (4, 6, 8) is contiguous with at least one other of the plurality of haptic devices (4, 6, 8).

13. A haptic apparatus (2) according to any one of claims 7 to 12, wherein the plurality of haptic devices (4, 6, 8) are arranged in a row.

14. A haptic system (50) at least comprising:
a haptic apparatus (2) according to any one of claims 7 to 13;
a plurality of ohm-meters (54, 56, 58), respective ones of which are configured to measure an electrical resistance of the porous member (34, 36, 38) in respective ones of the plurality of haptic devices (4, 6, 8) of the haptic apparatus (2); and
a microcontroller (52) arranged to receive the electrical resistance of the porous members (34, 36, 38) of the respective ones of the plurality of haptic devices (4, 6, 8) from respective ones of the plurality of ohm-meters (54, 56, 58) and to respond to a change in the electrical resistance of the porous members (34, 36, 38) as measured by a respective one of the plurality of ohm-meters (54, 56, 58).

15. A haptic system according to claim 14, further comprising a reservoir of the electrically conducting incompressible liquid (15), the reservoir being in fluid communication with each of the plurality of haptic devices (4, 6, 8) to maintain a level of the incompressible liquid therein.
